(19) Europäisches Patentamt
European Patent Office
Office européen des brevets

(11) Publication number: 0 202 761
A1

# (12) EUROPEAN PATENT APPLICATION

(21) Application number: 86302774.4

(22) Date of filing: 14.04.86

(51) Int. Cl.[4]: G 21 F 9/16

(30) Priority: 17.04.85 US 724366

(43) Date of publication of application: 26.11.86 Bulletin 86/48

(84) Designated Contracting States: DE FR GB IT SE

(71) Applicant: WESTINGHOUSE ELECTRIC CORPORATION
Westinghouse Building Gateway Center
Pittsburgh Pennsylvania 15222(US)

(72) Inventor: Grant, David Charles
1018 Creekvue Drive
Gibsnia Pennsylvania 15044(US)

(74) Representative: van Berlyn, Ronald Gilbert
23, Centre Heights
London, NW3 6JG(GB)

(54) **Improvements in or relating to immobilizing cesium in encapsulated radioactive waste material.**

(57) Cesium-containing radioactive wast material immobilized in an encapsulating medium, the cesium being present as sodium tetraphenyl boron. The radioactive waste is preferably from 25 to 150% by weight of the weight of the encapsulating medium, and the sodium tetraphenyl boron is preferably in an amount stoichiometric with the cesium up to about 100 mole% in excess of stoichiometric. Also a method of immobilizing cesium in encapsulated radioactive waste material by determining the cesium content of the radioactive waste material, mixing sodium tetraphenyl boron into the radioactive waste material, and mixing the radioactive waste material into an encapsulating medium such as cement.

# IMPROVEMENTS IN OR RELATING TO IMMOBILIZING CESIUM IN ENCAPSULATED RADIOACTIVE WASTE MATERIAL

This invention relates to immobilizing cesium in encapsulated radioactive waste material.

Nuclear power plants, as well as other sources, produce large quantities of radioactive waste that must be immobilized in cement or other materials for storage until its radioactivity has declined to a safe level. Government guidelines specify how much radioactive material can leach from this encapsulated waste material. While most encapsulated radioactive wastes meet the present guidelines, some do not, and must be placed in special containers. In addition, it is possible that the guidelines may be made more stringent at some time in the future.

The most mobile and leachable radioactive element found in many of these nuclear wastes is cesium. While the weight percent of cesium in radioactive waste is generally very small, cesium emits high energy gamma radiation, has a 30 year half life, and is typically responsible for most of the radioactivity.

The immobilization of cesium in cement has been attempted by the addition of additives to the cement, such as clay. However, large quantities of clay are required to effectively immobilize cesium, and that adds substantially to the amount of waste that must be disposed of. In addition, clays immobilize cesium by an ion exchange

process, and ion exchange processes are reversible under the proper chemical conditions.

Accordingly, the present invention resides in a cesium-containing radioactive waste material immobilized in an encapsulating medium, characterized in that the cesium is present as cesium tetraphenyl boron.

The invention also includes a method of immobilizing cesium in encapsulated radioactive waste material characterized by determining the cesium content of said radioactive waste material; mixing sodium tetraphenyl boron into said radioactive waste material, in an amount stoichiometric with said cesium content, up to 100 mole% in excess of stoichiometric; and mixing said radioactive waste material with an encapsulating medium.

It has thus been found that cesium in encapsulated nuclear waste can be effectively immobilized by the addition of sodium tetraphenyl boron to the nuclear waste prior to its encapsulation. In spite of the great variety of ions that are present in nuclear waste, sodium tetraphenyl boron seems to immobilize only the cesium and not any of the other ions that are present. This is a fortunate and surprising discovery because sodium tetraphenyl boron is expensive and could not be used to immobilize cesium if it also immobilized other ions that are present.

The nuclear waste material may take the form of a slurry, a liquid, or a solid, and may contain a wide variety of radioactive and non-radioactive elements. However, in order to be treated by the method of this invention, it must contain cesium. The quantity of cesium in the radioactive waste can be determined by doing a radioactive analysis of the waste, as is well known in the art.

The cesium in the radioactive waste is immobilized by the addition of sodium tetraphenyl boron. This compound is the only compound that has been found to successfully immobilize cesium. The immobilization of the

cesium occurs by the formation of cesium tetraphenyl boron, as shown by the following reaction:

$$NaB(C_6H_5)_4 + Cs^+ \rightarrow CsB(C_6H_5)_4 + Na^+ .$$

The precipitated cesium tetraphenyl boron is very insoluble in water, even in water having a high pH, as does cement. The sodium tetraphenyl boron is preferably added to the radioactive waste prior to its immobilization in an encapsulating medium so that the reaction of the sodium tetraphenyl boron with the cesium ion has time to occur; otherwise the encapsulating medium may reduce the mobility of the reactants. Sufficient sodium tetraphenyl boron should be added to immobilize all of the cesium that is determined to be present by means of the radioactive analysis. Generally, this can be accomplished by adding a stoichiometric amount of the sodium tetraphenyl boron up to 100 mole% in excess of stoichiometric.

The radioactive waste containing the sodium tetraphenyl boron is then mixed with an encapsulating medium. Any encapsulating medium for radioactive waste can be used, including, for example, cement, various organic resins, and glass. It is also possible to place the radioactive waste containing the sodium tetraphenyl boron in a container, which then acts as the encapsulating medium. The preferred encapsulating medium is cement, particularly portland-type cement, because cesium leaches readily from cement, and therefore this invention is most useful when applied to cement. From 25 to 150 weight per cent of the radioactive waste is mixed with the encapsulating medium, though this ratio is not critical and may vary depending on the encapsulating medium used. If the encapsulating medium is cement, the radioactive waste may be mixed with it in the final storage container, or mixing may be accomplished in a separate container, and the mixture poured into the final storage container.

The inventon will now be illustrated with reference to the following Example:

EXAMPLE

Samples of decontamination waste, with and without sodium tetraphenyl boron, were mixed with cement and tested for cesium leachability. One gram of sodium tetraphenyl boron was mixed with 85.2 grams of decontamination radioactive nuclear waste containing organic matter for 5 minutes. Then 63.9 grams of cement were added to this sample, and to another sample of 85.2 grams of the waste that did not contain sodium tetraphenyl boron. The samples were mixed for 5 additional minutes and were poured into cylinders 2.5 cm. in diameter and 7.6 cm. long. The samples were cured in an oven for one day at 50°C and were then permitted to sit at room temperature for a week. The samples were then tested for cesium leachability. A leachability index of greater than 6 was considered to be acceptable. The cesium leachability index of the sample that did not contain the sodium tetraphenyl boron was 5.8, and the cesium leachability of the sample that contained the sodium tetraphenyl boron was 6.8.

This organic waste represented a "worst case" because the presence of organic material in the waste interfered somewhat with the reaction between the sodium tetraphenyl boron and the cesium. Much higher cesium leachability indices are expected with radioactive waste containing smaller amounts of organic matter, and it will therefore be necessary to use much less sodium tetraphenyl boron.

CLAIMS:

1. Cesium-containing radioactive waste material immobilized in an encapsulating medium, characterized in that the cesium is present as cesium tetraphenyl boron.

2. An immobilized radioactive waste material according to claim 1, characterized in that the encapsulating medium is portland cement.

3. An immobilized radioactive waste material according to claim 1 or 2, characterized in that the radioactive waste material is from 25 to 150% by weight of the weight of the encapsulating medium.

4. A method of immobilizing cesium in encapsulated radioactive waste material characterized by determining the cesium content of said radioactive waste material; mixing sodium tetraphenyl boron into said radioactive waste material, in an amount stoichiometric with said cesium content, up to 100 mole% in excess of stoichiometric; and mixing said radioactive waste material with an encapsulating medium.

5. A method according to claim 4, characterized in that the encapsulating medium is portland cement.

6. A method according to claim 4 or 5, characterized in that the radioactive waste material is from 25 to 150% by weight of the weight of said encapsulating medium.

European Patent Office

# EUROPEAN SEARCH REPORT

0202761
Application number

EP 86 30 2774

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-2 982 785 (McKENZIE) * Claims 1,3; column 1, lines 31-34 * | 1-6 | G 21 F 9/16 |
| | --- | | |
| Y | DE-A-2 827 030 (ASEA) * Claim 1 * | 1-6 | |
| | --- | | |
| Y | US-A-3 468 959 (MOORE) * Whole document * | 1-6 | |
| | ----- | | |
| | | | TECHNICAL FIELDS SEARCHED (Int. Cl.4) |
| | | | G 21 F<br>C 01 D<br>C 22 B |

The present search report has been drawn up for all claims

| Place of search | Date of completion of the search | Examiner |
|---|---|---|
| THE HAGUE | 15-06-1986 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82